# EUROPEAN PATENT APPLICATION

(11) **EP 4 723 532 A1**
(43) Date of publication of application: **08.04.2026**
(21) Application number: 24844561.1
(22) Date of filing: 01.07.2024
(51) Int. Cl.: H04L 5/00

(54) **SIGNAL SENDING METHOD AND APPARATUS, AND SIGNAL RECEIVING METHOD AND APPARATUS**

(30) Priority: 21.07.2023 CN 202310901567
(71) Applicant: Huawei Technologies Co., Ltd., Shenzhen, Guangdong 518129 (CN)
(72) Inventor: XIE, Xinqian, Shenzhen, Guangdong 518129 (CN); SHAO, Jiafeng, Shenzhen, Guangdong 518129 (CN)
(74) Representative: Pfenning, Meinig & Partner mbB
(86) International application number: PCT/CN2024/102863
(87) International publication number: WO 2025/020867

(57) **Abstract**

A signal sending and receiving method and apparatus are provided. The signal sending method includes: determining a first signal and a first resource, where the first signal is used to carry downlink control information, the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2; and sending the first signal on the first resource, where the N signal elements are in one-to-one correspondence with the N resource groups. According to the method, sensing performance in a device networking scenario can be improved.

## Description

This application claims priority to Chinese Patent Application No. 202310901567.5, filed with the China National Intellectual Property Administration on July 21, 2023 and entitled "SIGNAL SENDING AND RECEIVING METHOD AND APPARATUS", which is incorporated herein by reference in its entirety.

### TECHNICAL FIELD

This application relates to the communication field, and more specifically, to a signal sending and receiving method and apparatus.

### BACKGROUND

During evolution of a 5th generation (5th generation, 5G) mobile communication system to a 5G-advanced (5G-Advanced, 5G-A) technology, an integrated sensing and communication technology is considered as one of key technologies that can be used to extend a service capability of a mobile communication network. A core idea of this technology is to newly add a sensing capability to the mobile communication network and construct capabilities of detecting, tracking, and imaging a target, so that two capabilities of communication and sensing are integrated into one network, thereby implementing harmonious coexistence or even mutual benefits. How to improve sensing performance in a networking scenario is a problem to be urgently resolved.

### SUMMARY

This application provides a signal sending and receiving method and apparatus. One control channel is modulated into at least two same signal elements, and the at least two same signal elements are mapped to at least two symbols in at least two time units for sending. In this way, interference between network devices in a networking scenario can be reduced, thereby improving a capability of the network device to perform sensing through the control channel. In addition, a capability of a terminal device to perform sensing through the control channel is improved.

According to a first aspect, a signal sending method is provided. The method may be performed by a network device, may be performed by a module (for example, a processor, a chip, or a chip system) used in the network device, or may be implemented by a logical node, a logical module, or software that can implement all or a part of functions of the network device.

The method includes: determining a first signal and a first resource, where the first signal is used to carry downlink control information, the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2; and sending the first signal on the first resource, where the N signal elements are in one-to-one correspondence with the N resource groups.

It should be understood that, that the N resource groups correspond to the N time domain symbols may be understood as that each time domain symbol includes one resource group, and therefore, there are a total of N time domain symbols corresponding to the N resource groups. That the N time domain symbols correspond to the at least two time units may be understood as that one time unit may include one or more time domain symbols, and the N time domain symbols are included in two or more time units. That the N signal elements are in one-to-one correspondence with the N resource groups may be understood as that each signal element is sent on one resource group, and therefore, the N signal elements need to be sent on the N resource groups. Similar expressions in embodiments of this application may be understood in this way. Details are not described below again.

According to the solution of this application, a control channel includes at least two symbols in at least two slots, and signals mapped to different time domain symbols in one control channel are the same, so that sensing performance in a networking scenario can be improved.

With reference to the first aspect, in some implementations of the first aspect, the method further includes: receiving an echo signal of the first signal; and performing sensing based on the echo signal.

With reference to the first aspect, in some implementations of the first aspect, the method further includes: sending first indication information, where the first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

The quantity N of signal elements included in the first signal may also be determined by indicating the quantity N of resource groups of the first resource, or may be determined by indicating time domain positions of the N resource groups and a quantity of time units corresponding to the N time domain symbols.

With reference to the first aspect, in some implementations of the first aspect, the first indication information is carried in any one of a physical broadcast channel PBCH, a system information block SIB, radio resource management RRC signaling, media access control MAC signaling, and downlink control information DCI.

With reference to the first aspect, in some implementations of the first aspect, the method further includes: sending second indication information, where the second indication information indicates configuration information of a second signal, the second signal is used to carry downlink control information, and the second indication information and the first indication information are carried in same signaling, where the configuration information includes at least one of a quantity of time domain symbols occupied by the second signal in one time unit, a symbol index of a time domain symbol occupied by the second signal in one time unit, a quantity of subcarriers occupied by the second signal, and an index of a subcarrier occupied by the second signal; and sending the second signal, where the time domain symbol occupied by the second signal belongs to one time unit.

The second signal is used only for communication, and is not used for sensing. The second indication information indicates configuration information of a communication-only control channel, and the second indication information and configuration information indicating a sensing and communication control channel are carried on a same resource.

According to a second aspect, a signal receiving method is provided. The method may be performed by a terminal device, may be performed by a module (for example, a processor, a chip, or a chip system) used in the terminal device, or may be implemented by a logical node, a logical module, or software that can implement all or a part of functions of the terminal device.

The method includes: determining a first resource, where the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2; and receiving a first signal on the first resource, where the first signal is used to carry downlink control information, the first signal includes N signal elements, the N signal elements correspond to a same signal, and the N signal elements are in one-to-one correspondence with the N resource groups.

According to the solution of this application, a control channel includes at least two symbols in at least two slots, and signals mapped to different symbols in one control channel are the same, so that sensing performance in a networking scenario can be improved.

With reference to the second aspect, in some implementations of the second aspect, the method further includes: performing sensing based on the first signal.

It should be understood that the first signal may be a first signal obtained through refraction and/or reflection by a sensed target.

With reference to the second aspect, in some implementations of the second aspect, the method further includes: receiving first indication information, where the first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

The quantity N of signal elements included in the first signal may also be determined by indicating the quantity N of resource groups of the first resource, or may be determined by indicating time domain positions of the N resource groups and a quantity of time units corresponding to the N time domain symbols.

With reference to the second aspect, in some implementations of the second aspect, the first indication information is carried in any one of a physical broadcast channel PBCH, a system information block SIB, radio resource management RRC signaling, media access control MAC signaling, and downlink control information DCI.

With reference to the second aspect, in some implementations of the second aspect, the method further includes: receiving second indication information, where the second indication information indicates configuration information of a second signal, the second signal is used to carry downlink control information, and the second indication information and the first indication information are carried in same signaling, where the configuration information includes at least one of a quantity of symbols occupied by the second signal in one time unit, a symbol index of a symbol occupied by the second signal in one time unit, a quantity of subcarriers occupied by the second signal, and an index of a subcarrier occupied by the second signal; and receiving the second signal, where the symbol occupied by the second signal belongs to one time unit.

According to a third aspect, a signal receiving method is provided. The method may be performed by a network device, may be performed by a module (for example, a processor, a chip, or a chip system) used in the network device, or may be implemented by a logical node, a logical module, or software that can implement all or a part of functions of the network device.

The method includes: receiving an echo signal of a first signal on a first resource, where the first signal is used to carry downlink control information, the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, N is a positive integer greater than or equal to 2, and the N signal elements are in one-to-one correspondence with the N resource groups; and performing sensing based on the echo signal.

According to a fourth aspect, a signal sending method is provided. The method may be performed by a network device, may be performed by a module (for example, a processor, a chip, or a chip system) used in the network device, or may be implemented by a logical node, a logical module, or software that can implement all or a part of functions of the network device.

The method includes: determining a first signal and a first resource, where the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2; and sending the first signal on the first resource, where the N signal elements are in one-to-one correspondence with the N resource groups.

With reference to the fourth aspect, in some implementations of the fourth aspect, the first signal is used to carry downlink control information.

With reference to the fourth aspect, in some implementations of the fourth aspect, the method further includes: receiving an echo signal of the first signal; and performing sensing based on the echo signal.

With reference to the fourth aspect, in some implementations of the fourth aspect, the method further includes: sending first indication information, where the first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

The quantity N of signal elements included in the first signal may also be determined by indicating the quantity N of resource groups of the first resource, or may be determined by indicating time domain positions of the N resource groups and a quantity of time units corresponding to the N time domain symbols.

With reference to the fourth aspect, in some implementations of the fourth aspect, the first indication information is carried in any one of a physical broadcast channel PBCH, a system information block SIB, radio resource management RRC signaling, media access control MAC signaling, and downlink control information DCI.

With reference to the fourth aspect, in some implementations of the fourth aspect, the method further includes: sending second indication information, where the second indication information indicates configuration information of a second signal, the second signal is used to carry downlink control information, and the second indication information and the first indication information are carried in same signaling, where the configuration information includes at least one of a quantity of time domain symbols occupied by the second signal in one time unit, a symbol index of a time domain symbol occupied by the second signal in one time unit, a quantity of subcarriers occupied by the second signal, and an index of a subcarrier occupied by the second signal; and sending the second signal, where the time domain symbol occupied by the second signal belongs to one time unit.

According to a fifth aspect, a signal receiving method is provided. The method may be performed by a terminal device, may be performed by a module (for example, a processor, a chip, or a chip system) used in the terminal device, or may be implemented by a logical node, a logical module, or software that can implement all or a part of functions of the terminal device.

The method includes: determining a first resource, where the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2; and receiving a first signal on the first resource, where the first signal includes N signal elements, the N signal elements correspond to a same signal, and the N signal elements are in one-to-one correspondence with the N resource groups.

With reference to the fifth aspect, in some implementations of the fifth aspect, the first signal is used to carry downlink control information.

With reference to the fifth aspect, in some implementations of the fifth aspect, the method further includes: performing sensing based on the first signal.

With reference to the fifth aspect, in some implementations of the fifth aspect, the method further includes: receiving first indication information, where the first indication information indicates at least one of the quantity N of signal elements included in the first signal, the quantity M of subcarriers included in each of the N resource groups, frequency domain positions of M subcarriers included in each of the N resource groups, and a modulation and coding scheme MCS corresponding to the first signal.

The quantity N of signal elements included in the first signal may also be determined by indicating the quantity N of resource groups of the first resource, or may be determined by indicating time domain positions of the N resource groups and a quantity of time units corresponding to the N time domain symbols.

With reference to the fifth aspect, in some implementations of the fifth aspect, the first indication information is carried in any one of a physical broadcast channel PBCH, a system information block SIB, radio resource management RRC signaling, media access control MAC signaling, and downlink control information DCI.

With reference to the fifth aspect, in some implementations of the fifth aspect, the method further includes: receiving second indication information, where the second indication information indicates configuration information of a second signal, the second signal is used to carry downlink control information, and the second indication information and the first indication information are carried in same signaling, where the configuration information includes at least one of a quantity of symbols occupied by the second signal in one time unit, a symbol index of a symbol occupied by the second signal in one time unit, a quantity of subcarriers occupied by the second signal, and an index of a subcarrier occupied by the second signal; and receiving the second signal, where the symbol occupied by the second signal belongs to one time unit.

According to a sixth aspect, a signal receiving method is provided. The method may be performed by a network device, may be performed by a module (for example, a processor, a chip, or a chip system) used in the network device, or may be implemented by a logical node, a logical module, or software that can implement all or a part of functions of the network device.

The method includes: receiving an echo signal of a first signal on a first resource, where the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, N is a positive integer greater than or equal to 2, and the N signal elements are in one-to-one correspondence with the N resource groups; and performing sensing based on the echo signal.

With reference to the sixth aspect, in some implementations of the sixth aspect, the first signal is used to carry downlink control information.

According to a seventh aspect, a signal sending apparatus is provided. The apparatus includes: a processing unit, configured to determine a first signal and a first resource, where the first signal is used to carry downlink control information, the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2; and an interface unit, configured to send the first signal on the first resource, where the N signal elements are in one-to-one correspondence with the N resource groups.

With reference to the seventh aspect, in some implementations of the seventh aspect, the interface unit is further configured to receive an echo signal of the first signal; and the processing unit is further configured to perform sensing based on the echo signal.

With reference to the seventh aspect, in some implementations of the seventh aspect, the interface unit is further configured to: send first indication information, where the first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

With reference to the seventh aspect, in some implementations of the seventh aspect, the first indication information is carried in any one of a physical broadcast channel PBCH, a system information block SIB, radio resource management RRC signaling, media access control MAC signaling, and downlink control information DCI.

With reference to the seventh aspect, in some implementations of the seventh aspect, the interface unit is further configured to: send second indication information, where the second indication information indicates configuration information of a second signal, the second signal is used to carry downlink control information, and the second indication information and the first indication information are carried in same signaling, where the configuration information includes at least one of a quantity of symbols occupied by the second signal in one time unit, a symbol index of a symbol occupied by the second signal in one time unit, a quantity of subcarriers occupied by the second signal, and an index of a subcarrier occupied by the second signal; and send the second signal, where the symbol occupied by the second signal belongs to one time unit.

According to an eighth aspect, a signal receiving apparatus is provided. The apparatus includes: a processing unit, configured to determine a first resource, where the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2; and an interface unit, configured to receive a first signal on the first resource, where the first signal is used to carry downlink control information, the first signal includes N signal elements, the N signal elements correspond to a same signal, and the N signal elements are in one-to-one correspondence with the N resource groups.

With reference to the eighth aspect, in some implementations of the eighth aspect, the processing unit is further configured to perform sensing based on the first signal.

With reference to the eighth aspect, in some implementations of the eighth aspect, the interface unit is further configured to receive first indication information, where the first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

With reference to the eighth aspect, in some implementations of the eighth aspect, the first indication information is carried in any one of a physical broadcast channel PBCH, a system information block SIB, radio resource management RRC signaling, media access control MAC signaling, and downlink control information DCI.

With reference to the eighth aspect, in some implementations of the eighth aspect, the interface unit is further configured to: receive second indication information, where the second indication information indicates configuration information of a second signal, the second signal is used to carry downlink control information, and the second indication information and the first indication information are carried in same signaling, where the configuration information includes at least one of a quantity of symbols occupied by the second signal in one time unit, a symbol index of a symbol occupied by the second signal in one time unit, a quantity of subcarriers occupied by the second signal, and an index of a subcarrier occupied by the second signal; and receive the second signal, where the symbol occupied by the second signal belongs to one time unit.

According to a ninth aspect, a signal receiving apparatus is provided. The apparatus includes: an interface unit, configured to receive an echo signal of a first signal on a first resource, where the first signal is used to carry downlink control information, the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, N is a positive integer greater than or equal to 2, and the N signal elements are in one-to-one correspondence with the N resource groups; and a processing unit, configured to perform sensing based on the echo signal.

According to a tenth aspect, a signal sending and receiving apparatus is provided. The apparatus may be a network device, may be a component (for example, a processor, a chip, or a chip system) of the network device, or may be a logical node, logical module, or software that can implement all or a part of functions of the network device. The apparatus has a function of implementing the first aspect, the third aspect, the fourth aspect, or the sixth aspect, and the corresponding possible implementations. The function may be implemented by using hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to cause the apparatus to perform the signal sending and receiving method in the first aspect, the third aspect, the fourth aspect, or the sixth aspect, and the corresponding possible implementations. In this design, the apparatus may be the network device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, to cause the chip in the network device to perform the signal sending and receiving method in the first aspect, the third aspect, the fourth aspect, or the sixth aspect, and the corresponding possible implementations. Optionally, the processing unit may execute the instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the signal sending and receiving method in the first aspect, the third aspect, the fourth aspect, or the sixth aspect.

According to an eleventh aspect, a signal receiving apparatus is provided. The apparatus may be a terminal device, may be a component (for example, a processor, a chip, or a chip system) of the terminal device, or may be a logical node, logical module, or software that can implement all or a part of functions of a network device. The apparatus has a function of implementing the second aspect or the fifth aspect, and the various corresponding possible implementations. The function may be implemented by using hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to cause the apparatus to perform the signal receiving method in the second aspect or the fifth aspect, and the various corresponding possible implementations. In this design, the apparatus may be the terminal device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, to cause the chip in the network device to perform the signal receiving method in the second aspect or the fifth aspect, and the various corresponding possible implementations. Optionally, the processing unit may execute the instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the signal receiving method in the second aspect or the fifth aspect.

According to a twelfth aspect, a communication system is provided. The communication system includes the communication device provided in the seventh aspect or the ninth aspect, and the communication apparatus provided in the eighth aspect. The communication system may complete the data transmission method provided in any one of the first aspect to the sixth aspect or the possible implementations of the first aspect to the sixth aspect.

According to a thirteenth aspect, a computer-readable storage medium is provided. The computer-readable storage medium stores a computer program. When the computer program is run on a computer, the computer is caused to execute instructions of the method according to any one of the first aspect to the sixth aspect or the possible implementations of the first aspect to the sixth aspect.

According to a fourteenth aspect, a chip is provided, and includes a processing unit. The processing unit may execute instructions, to perform the method according to any one of the first aspect to the sixth aspect or the possible implementations of the first aspect to the sixth aspect.

According to a fifteenth aspect, a computer program product is provided. The product includes computer program code. When the computer program code is run, instructions of the method according to any one of the first aspect to the sixth aspect or the possible implementations of the first aspect to the sixth aspect are executed.

According to a sixteenth aspect, a chip system is provided, and includes a memory and a processor. The memory is configured to store instructions. The processor is configured to: invoke the instructions from the memory and run the instructions, to perform the method according to the first aspect to the sixth aspect and the possible implementations thereof.

The chip system may include an input circuit or interface configured to send information or data, and an output circuit or interface configured to receive information or data.

Specifically, for beneficial effects of other aspects, refer to the beneficial effects described in the first aspect and the second aspect.

### BRIEF DESCRIPTION OF DRAWINGS

FIG. 1 is a diagram of a possible system applicable to an embodiment of this application;
FIG. 2 is a diagram of a possible sensing mode;
FIG. 3 is a diagram of possible symbol distribution of a control channel;
FIG. 4 is a diagram of interference to sensing a signal in a networking scenario;
FIG. 5 is a schematic flowchart of a signal sending and receiving method according to an embodiment of this application;
FIG. 6 is a diagram of possible resource distribution according to an embodiment of this application;
FIG. 7 is a diagram of another possible resource distribution according to an embodiment of this application; and
FIG. 8 to FIG. 10 are block diagrams of several communication apparatuses according to this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or an evolved communication system like new radio (new radio, NR), vehicle-to-everything (vehicle-to-X V2X), where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, a long term evolution-vehicle (long term evolution-vehicle, LTE-V) technology, an internet of vehicles, machine type communication (machine type communication, MTC), an internet of things (internet of things, IoT), a long term evolution-machine (long term evolution-machine, LTE-M) technology, machine to machine (machine to machine, M2M), and device to device (device to device, D2D).

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a vehicle-mounted communication unit (telematics box, T-box), a chip, a system on a chip (system on a chip, SoC), or the like. The chip or the SoC may be installed in a vehicle, an OBU, an RSU, or a T-box.

The terminal device mentioned in embodiments of this application further includes at least any one of user equipment, an augmented reality AR/virtual reality VR/extended reality XR device, a wearable device, a smart home appliance terminal, a terminal device and a communication module of the terminal device, a mobile phone and a communication module of the mobile phone, a vehicle and a communication module of the vehicle, an information processing device, a display device, a network apparatus, a base station, a TRP, customer premise equipment (customer premise equipment, CPE), a router, a network access device, and the like. In consideration of Uu (UTRAN-to-terminal device) air interface transmission, both parties of wireless communication include a network apparatus and a user communication device. In consideration of SL air interface transmission, a receive end and a transmit end of wireless communication are both user communication devices. The network apparatus may be a conventional macro base station eNB in a conventional UMTS/LTE wireless communication system, may be a micro base station eNB in a heterogeneous network (heterogeneous network, HetNet) scenario, may be a baseband processing unit (baseband unit, BBU) and a remote radio unit (remote radio unit, RRU) in a distributed base station scenario, may be a baseband pool BBU pool and a radio frequency unit RRU in a CRAN scenario, or may be a gNB in a wireless communication system.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system, may be a gNB or a transmission point (TRP or TP) in a 5G system, for example, NR, or one antenna panel or one group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

The network device provides a service for a cell, and a terminal device communicates with the cell by using a transmission resource allocated by the network device (for example, a frequency domain resource or a spectral resource). The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have features of small coverage and low transmit power, and are applicable to providing a high-speed data transmission service.

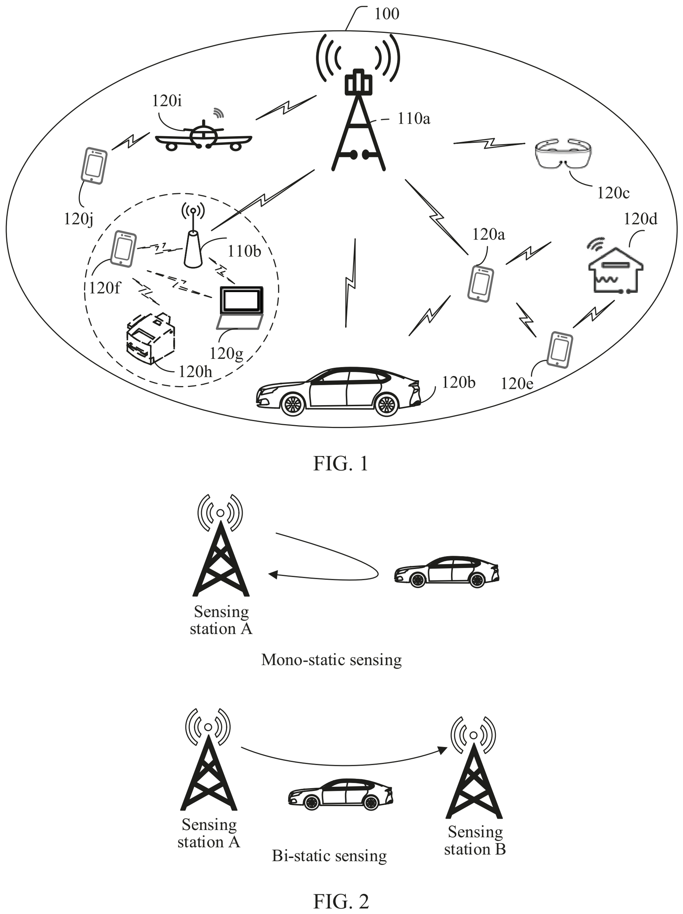

FIG. 1 is a diagram of a possible non-limiting system applicable to an embodiment of this application.

As shown in FIG. 1, a communication system includes a radio access network (radio access network, RAN) 100. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to a core network 200 in a wireless or wired manner. A core network device in the core network 200 and the RAN node 110 in the RAN 100 may be different physical devices respectively, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a network device, a RAN entity, an access node, or the like, and forms a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation base station (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or a part of the functions of the RAN node.

In another possible scenario, the plurality of RAN nodes coordinate to assist the terminal in implementing the radio access, and different RAN nodes separately implement a part of base station functions. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination of a software module and a hardware module.

The RAN node may be further expressed differently. In this application, unless otherwise specified subsequently, the network device is used for expression.

It should be understood that FIG. 1 is merely a diagram, and another device that is not shown may be further included. In addition, a quantity of terminal devices and a quantity of network devices included in the communication system are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in this application is not particularly limited in this application, provided that communication can be performed according to the method provided in embodiments of this application by running a program that records code of the method provided in this application. For example, the method provided in embodiments of this application may be performed by a terminal device or a network device, or a functional module that is in the terminal device or the network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable device, carrier or medium. For example, the computer-readable storage medium may include, but is not limited to, a magnetic storage device (for example, a hard disk drive, a floppy disk, or a magnetic tape), an optical disc (for example, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key driver). In addition, various storage media described in this specification may represent one or more devices and/or other machine-readable media that are configured to store information. The term "machine-readable media" may include but is not limited to a radio channel, and various other media that can store, include and/or carry instructions and/or data.

In this application, "sending information to... (a terminal)" may be understood as that a destination end of the information is the terminal, and may include directly or indirectly sending the information to the terminal. "Receiving information from... (a terminal)" may be understood as that a source end of the information is the terminal, and may include directly or indirectly receiving the information from the terminal. Necessary processing, for example, a format change, may be performed on information between the source end and the destination end for sending the information. However, the destination end may understand valid information from the source end. Similar expressions in this application may be understood similarly. Details are not described herein.

For ease of understanding of embodiments of this application, concepts and technologies mentioned in embodiments of this application are first briefly introduced.

It should be understood that related terms and descriptions below are applicable to all embodiments in this specification. Different embodiments may be used independently, or may be used in combination based on some internal or external relationships. Different implementations in embodiments may be used independently or in combination.

### 1. Subcarrier

A frequency domain resource is divided into several sub-resources in an OFDM system, and each sub-resource in frequency domain may be referred to as a subcarrier. The subcarrier may also be understood as a smallest granularity of the frequency domain resource.

### 2. Subcarrier spacing

A subcarrier spacing is a value of a spacing between center positions or peak positions of two adjacent subcarriers in frequency domain in an OFDM system. For example, a subcarrier spacing in an LTE system is 15 kHz, and a subcarrier spacing in a 5G NR system may be 15 kHz, 30 kHz, 60 kHz, 120 kHz, or the like.

### 3. Resource block

N consecutive subcarriers in frequency domain may be referred to as one resource block. For example, one resource block in an LTE system includes 12 subcarriers, and one resource block in an NR system in 5G also includes 12 subcarriers. With evolution of a communication system, a quantity of subcarriers included in one resource block may alternatively be another value.

### 4. Slot

In a 5G NR system, one slot includes 14 OFDM symbols, a slot length corresponding to a subcarrier spacing of 15 kHz is 1 ms, and a slot length corresponding to a subcarrier spacing of 30 kHz is 0.5 ms.

### 5. Subframe

A time length of one subframe is 1 ms in a 5G NR system.

### 6. OFDM symbol

An OFDM symbol is a smallest time unit in time domain in an OFDM system.

### 7. Time-frequency resource element

A time-frequency resource element is a smallest resource granularity in an OFDM system, is an OFDM symbol in time domain, and is a subcarrier in frequency domain.

### 8. Demodulation reference signal (dedicated demodulation reference signal, DMRS)

A DMRS is used to estimate an equivalent channel matrix of a data channel or a control channel, for recovering a received signal. The DMRS is a signal known to a receive end. The receive end may determine a fading characteristic of a radio channel, that is, a channel coefficient of the radio channel, based on the received signal and the known DMRS signal. The channel coefficient is used to recover the received signal. For example, the data channel may be a physical downlink shared channel (physical downlink shared channel, PDSCH) or a physical uplink shared channel (physical uplink shared channel, PUSCH). For example, the control channel may be a physical downlink control channel (PDCCH).

The data channel PDSCH is used as an example. Same precoding is usually performed on the DMRS and a sent data signal, to ensure that the DMRS and data pass through a same equivalent channel.

To reduce mutual interference between DMRS resources corresponding to a plurality of DMRS ports, resource mapping may be performed in a frequency division multiplexing, time division multiplexing, or code division multiplexing manner. In R15, two DMRS resource mapping types (respectively denoted as a type 1 and a type 2) are supported. A type-1 (Type-1) DMRS may support a maximum of eight orthogonal DMRS ports. A type-2 (Type-2) DMRS may support a maximum of 12 orthogonal DMRS ports.

### 9. Sensing

There is a specific difference between a technical principle of sensing and a technical principle of communication. In the communication, a transmit end modulates information on a radio wave and sends the radio wave to a receive end, and the receive end demodulates a signal carried on the radio wave to obtain the information. In the sensing, the transmit end needs to send the radio wave in a specific direction. When the radio wave irradiates a surface of a target, a reflected wave is generated. Then, the receive end receives and processes the reflected wave to obtain information such as a position, a speed, and a type of the target.

A sensing signal is a signal used to sense or detect a target. In other words, the sensing signal is a signal used to sense or detect environment information. For example, the sensing signal is an electromagnetic wave sent by a network device and used to sense the environment information. The sensing signal may also be referred to as a radar signal, a radar sensing signal, a sounding signal, a radar sounding signal, an environment sensing signal, or the like. This is not limited in embodiments of this application.

As shown in FIG. 2, sensing may be usually classified into two types in terms of modes: mono-static sensing and bi-static sensing. For the mono-static sensing, a transmit end and a receive end of a sensing signal are a same device. In a sensing signal procedure, this sensing station not only needs to send the sensing signal, but also needs to receive a reflected signal of the sensing signal from a surface of a target. Therefore, the mono-static sensing mode is also referred to as a self-send and self-receive mode. For the bi-static sensing, a transmit end and a receive end of a sensing signal are two different devices. In a sensing signal procedure, after a sensing station A sends the sensing signal, a sensing station B receives a reflected signal of the signal from a surface of a target. Therefore, the bi-static sensing mode is also referred to as an A-send and B-receive mode.

A station that performs sensing may be a network device, or may be a terminal device.

A sensed target may include various tangible objects that can be sensed on the ground, for example, a ground object like a mountain, a forest, or a building, and may further include a movable object like a vehicle, an uncrewed aerial vehicle, a pedestrian, or a terminal device. The sensed target is a target that can be sensed by a network device having a sensing function. The target may feed back an electromagnetic wave to the network device. The sensed target may also be referred to as a detected target, a sensed object, a detected object, a sensed device, or the like. This is not limited in embodiments of this application.

### 10. Modulation and coding scheme (modulation and coding scheme, MCS)

A modulation scheme includes quadrature phase shift keying (quadrature phase shift keying, QPSK) modulation and quadrature amplitude modulation (quadrature amplitude modulation, QAM). The QAM further includes 16 QAM, 64 QAM, and 256 QAM. For a terminal with good channel quality, a network device usually sends a downlink signal to a terminal device by using a high-order modulation scheme, for example, the 256 QAM or the 64 QAM, to obtain a higher communication rate. For a terminal with poor channel quality, the network device sends the downlink signal to the terminal by using a low-order modulation scheme, for example, the QPSK or the 16 QAM, to ensure communication reliability. In addition to the modulation scheme, the MCS further includes a code rate, and the code rate is usually represented as a decimal or a fraction greater than 0 and less than or equal to 1, for example, 1/2 or 2/3. A lower code rate indicates more redundant bits that are increased, higher communication reliability, but lower communication efficiency. Therefore, for the terminal with good channel quality, the network device usually uses a high code rate, to maintain high communication efficiency. For the terminal device with poor channel quality, the network device uses a low code rate, to ensure high communication reliability.

Table 1 is a possible defined MCS table. The MCS table may include an MCS index, a modulation order, and a target code rate. When the MCS index is obtained, the modulation order and the target code rate that correspond to the MCS index may be determined based on the MCS index in a table, for example, Table 1. It should be understood that Table 1 is one type of the MCS table, and the MCS table is not limited in embodiments of this application.

**Table 1 MCS index correspondence table**

| MCS index (MCS Index) | Modulation order (Modulation Order) | Target code rate R (Code rate R)×1024 | Spectral efficiency (Spectral efficiency) |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved (reserved) value | |
| 29 | 4 | Reserved value | |
| 30 | 6 | Reserved value | |
| 31 | 8 | Reserved value | |

### 11. Control channel

In a wireless communication system, communication may be classified into different types based on different types of transmit nodes and receive nodes. Usually, sending information by a network device to a terminal device is referred to as downlink communication, and sending information by the terminal device to the network device is referred to as uplink communication. In a long term evolution LTE/long term evolution advanced (long term evolution advanced, LTE-A) communication system and a new radio NR system, different duplex modes are mainly classified into a frequency division duplex FDD mode and a time division duplex TDD mode. For a wireless communication system operating in the TDD mode, a downlink carrier and an uplink carrier of the system are carriers at a same carrier frequency. An orthogonal frequency division multiple access (orthogonal frequency division multiple access, OFDMA) mode is usually used as a multiple access mode. A main feature of the orthogonal frequency division multiple access mode is that a transmission resource is divided into mutually orthogonal time-frequency resource elements (resource elements, REs), and signals sent by a transmit end are all carried on the REs and transmitted to a receive end. Because different REs are mutually orthogonal to each other, the receive end may separately receive a signal sent on each RE.

A control resource set (control resource SET, CORESET) is defined in a 5G-NR system. One control resource set includes several resource blocks in frequency domain, and includes K consecutive symbols in time domain. A value of K may be one of {1, 2, 3}. The network device sends a physical downlink control channel PDCCH to the terminal device in the control resource set. The PDCCH carries downlink control information (downlink control information, DCI) sent by the network device. For a control channel, a control channel element (control channel element, CCE) is defined in 5G-NR. One CCE includes six resource element groups (resource element groups, REGs), and one REG is all resource elements REs in one resource block in one OFDM symbol. In current 5G-NR, one REG includes 12 REs. One piece of DCI may be carried in L CCEs, and a value of L may be one of {1, 2, 4, 8, 16}. In a 5G-NR technology, when accessing the 5G-NR system, the terminal device first receives an SSB sent by the network device. A physical broadcast channel PBCH carries a time domain configuration and a frequency domain configuration that indicate the terminal device to detect a control resource set of the PDCCH. Then, the terminal device determines, based on the indication of the PBCH, a configuration of the control resource set, to receive the PDCCH and obtain the DCI in the PDCCH.

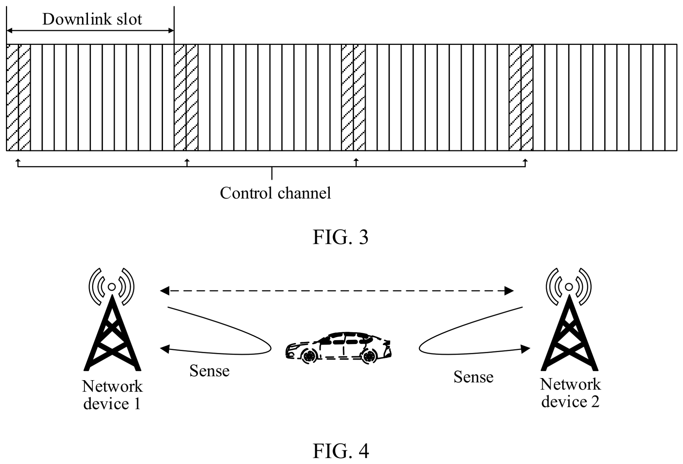

The network device sends the control channel on first K={1, 2, 3} symbols in a downlink slot, and control channels in different slots are different. In a possible implementation, as shown in FIG. 3, the control channel occupies first two symbols in each downlink slot.

When the control channel is used for sensing, as shown in FIG. 4, in a scenario in which a plurality of network devices are networked, when a network device 1 receives an echo signal of the control channel for sensing, a control channel sent by a network device 2 causes extremely strong interference to the sensing of the network device 1. Similarly, a control channel sent by the network device 1 also causes extremely strong interference to sensing of the network device 2. This causes significantly degradation of sensing performance of the two network devices. In addition, different control channels in different slots also cause degradation of performance of performing sensing by the terminal device through the control channel.

To improve sensing performance when the network device and the terminal device perform sensing through the control channel, this application provides an information transmission method 200.

It may be understood that in a method diagram in this application, an example in which a network device and a terminal device are execution bodies of interaction illustration is used to illustrate a method. However, the execution bodies of the interaction illustration are not limited in this application. For example, the network device in the figure may alternatively be a module (for example, a chip, a chip system, or a processor) used in the network device, or may be a logical node, a logical module, or software that can implement all or a part of functions of the network device. The terminal device in the figure may alternatively be a module (for example, a chip, a chip system, or a processor) used in the terminal device, or may be a logical node, a logical module, or software that can implement all or a part of functions of the terminal device.

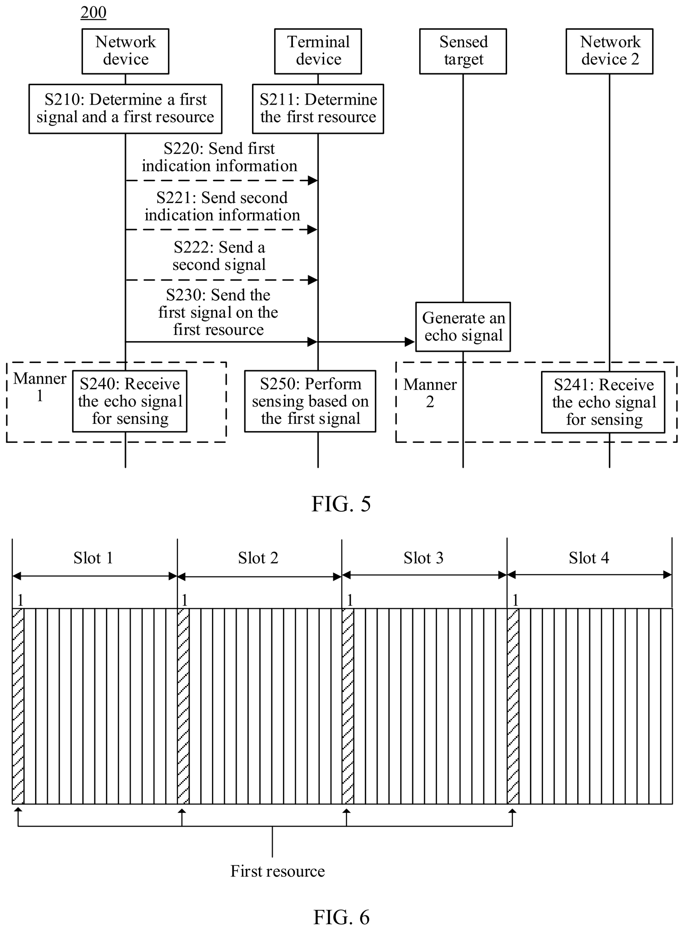

As shown in FIG. 5, the method 200 includes at least the following steps. It should be noted that steps represented by dashed lines in FIG. 5 are optional. Details are not described below.

S210: The network device determines a first signal and a first resource.

S211: The terminal device determines the first resource.

The first signal is used to carry downlink control information DCI, and is further used to generate an echo signal. The echo signal is used for target sensing. The first signal may also be referred to as a sensing and communication control signal, a sensing-communication control signal, or the like. This is not limited in this application. It should be noted that the echo signal of the first signal may be understood as a signal obtained by reflecting or refracting the first signal by a moving or static object/gas in a physical environment during propagation.

The first signal may be generated through processing such as coding and modulation on the DCI. The first signal may include N signal elements, and the N signal elements correspond to a same signal. It should be understood that the signal element is a part of a control channel, and may be referred to as a control channel element (control channel element, CCE) or a control element (control element, CE). This is not limited in this application.

The first resource is a resource for sending the first signal. Therefore, the first resource may also be referred to as a sensing and communication control resource, a sensing and communication control channel, a sensing-communication control channel, or the like. This is not limited in this application.

The first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2. Specifically, N may be a multiple of 4, for example, 8, 12, or 16, or may be a multiple of 8, for example, 8 or 16. This is not limited in this application.

The time unit may be a slot. In embodiments of this application, the slot is used as an example for description. In another implementation, the time unit may alternatively be another time domain division unit like a frame or a subframe. This is not limited in this application.

It should be noted that that the network device maps the first signal to the first resource may be understood as one of steps in which the network device determines the first signal and the first resource, and step S210 may alternatively be expressed as that "the network device generates the first signal". That the network device generates the first signal includes: The network device codes, scrambles, modulates data information carried on a sensing and communication channel, performs multi-antenna related processing (only for a plurality of antennas), performs resource mapping (to be specific, the network device maps the first signal to the first resource), performs OFDM baseband signal generation and processing, or the like.

In a possible implementation, before the first signal is sent, the method 200 may further include: S220: The network device sends first indication information; and correspondingly, the terminal device receives the first indication information.

The first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

It should be understood that the first indication information may directly indicate the quantity N of signal elements, may indicate the quantity N of resource groups, or may indicate time domain positions of the N resource groups and a quantity of time units corresponding to the N time domain symbols, to determine the quantity N of signal elements.

The time domain positions of the N resource groups may be positions of time domain symbols occupied by the first resource in the time units.

For example, as shown in FIG. 6, one slot includes 14 symbols, and a resource group included in the first resource is 1^{st} symbols in slots.

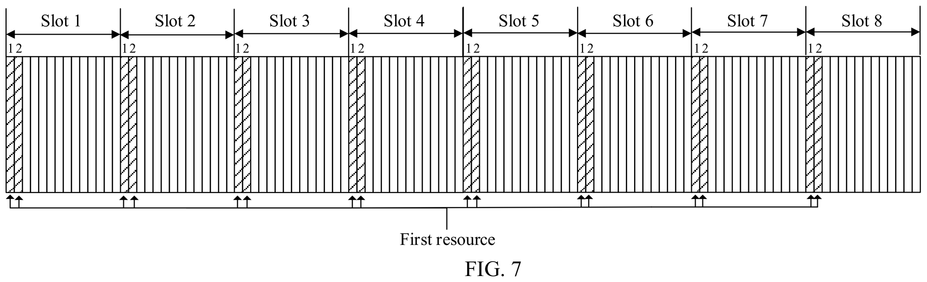

For another example, as shown in FIG. 7, a resource group included in the first resource is 1^{st} symbols and 2^{nd} symbols in slots.

The quantity of time units corresponding to the N time domain symbols is a quantity of time units occupied by the first resource.

For example, as shown in FIG. 6, symbols with a same number correspond to one sensing and communication control channel. There are four symbols numbered 1, that is, a quantity of repeated symbols is 4. In other words, a quantity of slots corresponding to the time domain symbols is 4. Every four symbols belong to one sensing and communication control channel (that is, the first resource), and four signal elements sent on the four symbols correspond to a same signal.

For another example, as shown in FIG. 7, symbols numbered 1 and 2 correspond to one sensing and communication control channel. A quantity of slots corresponding to the time domain symbols is 8. To be specific, 16 symbols in every eight slots are one sensing and communication control channel (that is, the first resource), and 16 signal elements sent on the 16 symbols correspond to a same signal.

The first indication information may indicate the quantity M of subcarriers included in each of the N resource groups.

The quantity M of subcarriers included in each resource group may be the same or may be different. This is not limited in this application.

The first indication information may indicate the frequency domain positions of the M subcarriers included in each of the N resource groups, or may indicate only that the frequency domain positions of the M subcarriers included in each of the N resource groups are the same or different.

For example, the first indication information may indicate frequency domain positions of M subcarriers in one resource group, and then indicate that frequency domain positions of M subcarriers in another resource group are the same. The first indication information may also indicate the frequency domain positions of the M subcarriers in each resource group, for example, by using a predefined correspondence table.

The network device maps the first signal to the M subcarriers. The M subcarriers may be consecutive, or may be distributed at intervals. For example, the first signal is mapped at an equal interval of one or two subcarriers in frequency domain, or consecutively occupies a plurality of subcarriers. A value of the quantity M of subcarriers is configured, to reduce a resource occupied for sending a sensing signal, reduce overheads, and improve resource utilization.

The modulation and coding scheme MCS refers to a modulation scheme and a code rate that correspond to each resource group on the first resource.

For example, the first indication information may indicate an MCS index corresponding to each of the N resource groups, for example, the MCS index included in the MCS index table in Table 1. A modulation order and a code rate that correspond to the MCS index may be obtained by querying the table. The first indication information is not limited to indicating a modulation scheme and a code rate in an MCS candidate table, for example, the modulation scheme and the code rate in Table 1, and may include another value. This is not limited in this application.

In a possible implementation, the first indication information may include a plurality of fields, for example, a first field. The first field indicates the time domain positions of the N resource groups in the first resource. For example, first three symbols in each slot may be used for the sensing and communication control channel, and the first field may include two bits, indicating a total of four states (00, 01, 10, 11). The state 00 indicates that the sensing and communication control channel has one symbol in one slot, that is, includes a 1^{st} symbol in one slot; the state 01 indicates that the sensing and communication control channel has two symbols in one slot, that is, includes a 1^{st} symbol and a 2^{nd} symbol in one slot; the state 10 indicates that the sensing and communication control channel has three symbols in one slot, that is, includes a 1^{st} symbol to a 3^{rd} symbol in one slot; and the state 11 is a reserved state and is not used for an indication. Details are shown in the following Table 2.

For example, as shown in FIG. 6, the first field may be 00 in this case.

For another example, as shown in FIG. 7, the first field may be 01 in this case.

**Table 2 Illustration of an indication state of the first field**

| State of the first field | Meaning |
|---|---|
| 00 | The first resource has one symbol in one slot |
| 01 | The first resource has two symbols in one slot |
| 10 | The first resource has three symbols in one slot |
| 11 | Reserved |

In another possible implementation, the first indication information includes a plurality of fields, for example, a second field. The second field indicates the quantity of time units occupied by the first resource. For example, the second field may include two bits, indicating a total of four states (00, 01, 10, 11). The state 00 indicates that the first resource is distributed in two different slots; the state 01 indicates that the first resource is distributed in four different slots; the state 10 indicates that the first resource is distributed in eight different slots; and the state 11 indicates that the first resource is distributed in 16 different slots. Details are shown in the following Table 3.

For example, as shown in FIG. 6, the second field may be 01 in this case.

For another example, as shown in FIG. 7, the second field may be 10 in this case.

**Table 3 Illustration of an indication state of the second field**

| State of the first field | Meaning |
|---|---|
| 00 | The first signal is distributed in two different slots |
| 01 | The first signal is distributed in four different slots |
| 10 | The first signal is distributed in eight different slots |
| 11 | The first signal is distributed in 16 different slots |

For another example, the second field may include three bits, including a total of eight states (000, 001, 010, 011, 100, 101, 110, 111). The state 000 indicates that the first resource is distributed in one different slot; the state 001 indicates that the first resource is distributed in two different slots; the state 010 indicates that the first resource is distributed in four different slots; the state 011 indicates that the first resource is distributed in eight different slots; and the state 100 indicates that the first resource is distributed in 12 different slots; the state 101 indicates that the first resource is distributed in 16 different slots; the state 110 indicates that the first resource is distributed in 32 different slots; and the state 111 indicates that the first resource is distributed in 64 different slots, as shown in the following Table 4.

**Table 4 Illustration of an indication state of the second field**

| State of the first field | Meaning |
|---|---|
| 000 | The first signal is distributed in one different slot |
| 001 | The first signal is distributed in two different slots |
| 010 | The first signal is distributed in four different slots |
| 011 | The first signal is distributed in eight different slots |
| 100 | The first signal is distributed in 12 different slots |
| 101 | The first signal is distributed in 16 different slots |
| 110 | The first signal is distributed in 32 different slots |
| 111 | The first signal is distributed in 64 different slots |

In another possible implementation, the first indication information includes a plurality of fields, for example, a third field. The third field indicates an MCS index corresponding to the first signal. For example, the third field may directly indicate a modulation scheme and a code rate of the first signal. For another example, the third field may indicate an MCS index value corresponding to each symbol, for example, the MCS index value in Table 1, or may be an MCS index value in another table. A modulation scheme and a code rate that correspond to the MCS index value may be obtained by querying the table.

In a possible implementation, the first indication information may indicate, by indicating one of a plurality of predefined or preconfigured configuration combinations, the quantity N of signal elements included in the first signal and resource configurations of the N resource groups. For example, a plurality of configurations may be preset. A configuration 1 indicates that the sensing and communication control channel has one symbol in one slot and the first signal is distributed in two different slots; a configuration 2 indicates that the sensing and communication control channel has one symbol in one slot and the first signal is distributed in four different slots; a configuration 3 indicates that the sensing and communication control channel has one symbol in one slot and the first signal is distributed in eight different slots; a configuration 4 indicates that the sensing and communication control channel has two symbols in one slot and the first signal is distributed in two different slots; a configuration 5 indicates that the sensing and communication control channel has two symbols in one slot and the first signal is distributed in four different slots; a configuration 6 indicates that the sensing and communication control channel has two symbols in one slot and the first signal is distributed in eight different slots; and so on. The rest can be deduced by analogy. The first indication information may directly indicate a specific configuration to be used. For setting manners of the plurality of configurations, the foregoing manner is merely a possible embodiment. This is not limited in this application.

The first indication information may be carried in any one of a physical broadcast channel PBCH, a system information block SIB, radio resource management RRC signaling, media access control MAC signaling, and downlink control information DCI.

It may be understood that, in embodiments of this application, indication information may be carried in physical layer signaling, for example, the downlink control information DCI, to implement a more dynamic and flexible indication, or may be carried in higher layer signaling for a more reliable indication. This is applicable to a scenario in which indication content changes slowly.

In a possible implementation, the method 200 may further include: S221: The network device sends second indication information, and correspondingly, the terminal device receives the second indication information. S222: Send a second signal.

The second indication information indicates configuration information of the second signal, and the second signal is used to carry downlink control information.

The second indication information and the first indication information may be carried in same signaling. The configuration information includes at least one of a quantity of time domain symbols occupied by the second signal in one time unit, a symbol index of a time domain symbol occupied by the second signal in one time unit, a quantity of subcarriers occupied by the second signal, and an index of a subcarrier occupied by the second signal.

The time domain symbol occupied by the second signal belongs to one time unit.

The second signal is used only for communication, and is not used for sensing. The second signal may be referred to as a communication control channel, or may be directly referred to as a control channel.

In other words, the network device sends two pieces of indication information, to respectively indicate configuration information of the sensing and communication control channel and configuration information of a communication-only control channel.

S230: The network device sends the first signal on the first resource; and correspondingly, the terminal device receives the first signal on the first resource.

The network device sends the first signal to the terminal device on the first resource. Optionally, the network device sends the first signal on mapping resources corresponding to a plurality of antenna ports. Correspondingly, the terminal device receives, on the first resource, the first signal sent by the network device. Optionally, the terminal device receives, on the mapping resources corresponding to the plurality of antenna ports, the first signal sent by the network device.

Although S220 and S230 are described based on one terminal device, the network device may send the first signal or the first indication information to one or more terminal devices. This is not limited in this application.

The first signal is reflected after the first signal encounters a sensed target, and an echo signal is generated. A sensing device may receive the echo signal of the first signal for sensing.

The echo signal is an electromagnetic feedback signal generated by transmitting, scattering, and reflecting an electromagnetic wave by the sensed target.

A device that receives the echo signal may be the network device that sends the first signal, or may be another network device.

Manner 1: S240: The network device receives the echo signal of the first signal for sensing.

Manner 2: S241: A network device 2 receives the echo signal of the first signal for sensing.

The entire echo signal or a part of the echo signal may be received, and the network device or the network device 2 may perform target sensing based on the received echo signal.

The network device may obtain a sensing result of the sensed target based on the sensing signal and an echo signal of the sensing signal. The sensing result may include, for example, a distance, an angle, a position, or a moving speed of the sensed target relative to the network device, or external dimensions of the sensed target. In this way, the network device may further use the sensing result to assist communication, to improve communication quality. It should be noted that a sensing function and a communication function may be implemented by a same network device, or may be implemented by a plurality of network devices through collaboration. This is not limited in embodiments of this application.

S250: The terminal device performs sensing based on the first signal.

The first signal carries the DCI, and the DCI may indicate a resource of a PDSCH. Therefore, optionally, the terminal device may receive the PDSCH based on a resource indicated by the DCI in the first signal.

For the terminal device, after the first signal is sent by the network device, the first signal undergoes impact of the sensed target, may be transmitted, scattered, reflected, and the like by the sensed target, but signal content of the first signal does not change, so that the terminal device can perform sensing based on the first signal.

That is, the first signal may also be used to complete the communication function while being used to complete the sensing.

According to embodiments provided in this application, sensing performance in a networking scenario can be improved.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application. For example, S221 in which the network device sends the second indication information and S220 in which the network device sends the first indication information may be performed at a same time, that is, the first indication information and the second indication information are included in same signaling, or may be performed at different times. This is not limited in this application. For another example, for S222 in which the network device sends the second signal, and S230 in which the network device sends the first signal, the second signal may be sent before the first signal, or the first signal may be sent before the second signal. This is not limited in this application. Any sequence arrangement in which a function of each step can be implemented shall fall within the protection scope of this application.

In embodiments of this application, one control channel is modulated into at least two same signal elements, and the at least two same signal elements are mapped to at least two symbols in at least two time units for sending. In this way, interference between network devices in a networking scenario can be reduced, thereby improving a capability of the network device to perform sensing through the control channel. In addition, a capability of the terminal device to perform sensing through the control channel is improved. In conclusion, according to the solutions, operating efficiency and performance of an integrated sensing and communication system can be improved.

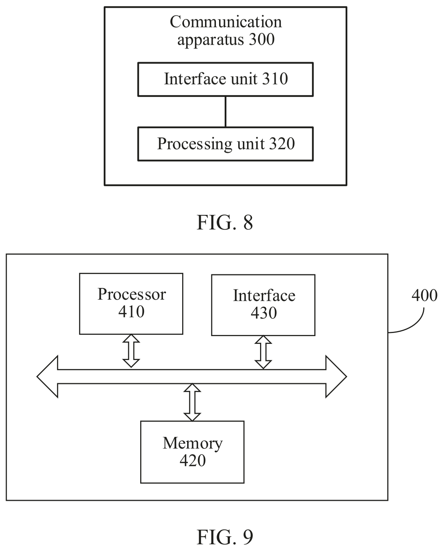

According to the foregoing method, FIG. 8 is a diagram of a wireless communication apparatus 300 according to an embodiment of this application.

As shown in FIG. 8, the communication apparatus 300 may include an interface unit 310 and a processing unit 320.

In a possible design, the communication apparatus 300 may correspond to the network device (or the base station or the gNB) in the foregoing method embodiments.

For example, the communication apparatus 300 may correspond to the network device in the method 200 according to embodiments of this application. The processing unit 320 in the communication apparatus 300 is configured to determine a first signal and a first resource, where the first signal is used to carry downlink control information, the first signal includes N signal elements, the N signal elements correspond to a same signal, the first resource includes N resource groups, any one of the N resource groups includes M subcarriers on one time domain symbol, and the N resource groups correspond to N time domain symbols, and the N time domain symbols correspond to at least two time units, where M is a positive integer, and N is a positive integer greater than or equal to 2.

The interface unit 310 in the communication apparatus 300 is configured to send the first signal on the first resource. The N signal elements are in one-to-one correspondence with the N resource groups.

In a possible implementation, the interface unit 310 in the apparatus 300 is further configured to receive an echo signal of the first signal. The processing unit 320 is further configured to perform sensing based on the echo signal.

In a possible implementation, the interface unit 310 is further configured to send first indication information, where the first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

Optionally, the first indication information is carried in any one of a physical broadcast channel PBCH, a system information block SIB, radio resource management RRC signaling, media access control MAC signaling, and downlink control information DCI.

In a possible implementation, the interface unit 310 is further configured to: send second indication information, where the second indication information indicates configuration information of a second signal, the second signal is used to carry downlink control information, and the second indication information and the first indication information are carried in same signaling, where the configuration information includes at least one of a quantity of symbols occupied by the second signal in one time unit, a symbol index of a symbol occupied by the second signal in one time unit, a quantity of subcarriers occupied by the second signal, and an index of a subcarrier occupied by the second signal; send the second signal, where the symbol occupied by the second signal belongs to one time unit.

The interface unit 310 in the communication apparatus 300 performs receiving and sending operations performed by the network device in the foregoing method embodiments, and the processing unit 320 performs an operation other than the receiving and sending operations.

For example, the communication apparatus 300 may correspond to the network device 2 in the method 200 according to embodiments of this application. The interface unit 310 in the communication apparatus 300 is configured to receive an echo signal of a first signal on a first resource, where the first signal is used to carry downlink control information, the first signal includes N signal elements, the N signal elements correspond to a same signal, the first resource includes N resource groups, any one of the N resource groups includes M subcarriers on one time domain symbol, the N resource groups correspond to N time domain symbols, and the N time domain symbols correspond to at least two time units, where M is a positive integer, N is a positive integer greater than or equal to 2, and the N signal elements are in one-to-one correspondence with the N resource groups. The processing unit 320 is configured to perform sensing based on the echo signal.

In another possible design, the communication apparatus 300 may alternatively correspond to the terminal device in the foregoing method embodiments.

For example, the communication apparatus 300 may correspond to the terminal device in the method 200 according to embodiments of this application. The processing unit 320 in the communication apparatus 300 is configured to determine a first resource, where the first resource includes N resource groups, any one of the N resource groups includes M subcarriers on one time domain symbol, the N resource groups correspond to N time domain symbols, and the N time domain symbols correspond to at least two time units, where M is a positive integer, and N is a positive integer greater than or equal to 2. The interface unit 310 is configured to receive a first signal on the first resource, where the first signal is used to carry downlink control information, the first signal includes N signal elements, the N signal elements correspond to a same signal, and the N signal elements are in one-to-one correspondence with the N resource groups.

In a possible implementation, the processing unit 320 is further configured to perform sensing based on the first signal.

In a possible implementation, the interface unit 310 is further configured to receive first indication information, where the first indication information indicates at least one of the quantity N of signal elements included in the first signal, the quantity M of subcarriers included in each of the N resource groups, frequency domain positions of the M subcarriers included in each of the N resource groups, and a modulation and coding scheme MCS corresponding to the first signal.

Optionally, the first indication information is carried in any one of a physical broadcast channel PBCH, a system information block SIB, radio resource management RRC signaling, media access control MAC signaling, and downlink control information DCI.

In a possible implementation, the interface unit 310 is further configured to: send second indication information, where the second indication information indicates configuration information of a second signal, the second signal is used to carry downlink control information, and the second indication information and the first indication information are carried in same signaling, where the configuration information includes at least one of a quantity of symbols occupied by the second signal in one time unit, a symbol index of a symbol occupied by the second signal in one time unit, a quantity of subcarriers occupied by the second signal, and an index of a subcarrier occupied by the second signal; send the second signal, where the symbol occupied by the second signal belongs to one time unit.

The interface unit 310 in the communication apparatus 300 performs receiving and sending operations performed by the terminal device in the foregoing method embodiments, and the processing unit 320 performs an operation other than the receiving and sending operations.

According to the foregoing method, FIG. 9 is a diagram of a communication apparatus 400 according to an embodiment of this application. As shown in FIG. 9, the apparatus 400 may be a terminal device, or may be a network device.

The apparatus 400 may include a processor 410 (that is, an example of a processing unit) and a memory 420. The memory 420 is configured to store instructions, and the processor 410 is configured to execute the instructions stored in the memory 420, to cause the apparatus 400 to implement the steps performed by the terminal device or the network device in the method 200.

Further, the apparatus 400 may further include an interface 430 (that is, an example of an interface unit module). Further, the processor 410, the memory 420, and the interface 430 may communicate with each other through an internal connection path, to transfer a control signal and/or a data signal. The memory 420 is configured to store a computer program. The processor 410 may be configured to invoke the computer program from the memory 420 and run the computer program, to control the interface 430 to receive a signal or send a signal, so that the steps of the terminal device or the network device in the foregoing method are completed. The memory 420 may be integrated into the processor 410, or may be disposed separately from the processor 410.

In a possible implementation, if the communication apparatus 400 is a communication device, the interface 430 is a receiver or a transmitter. The receiver and the transmitter may be a same physical entity or different physical entities. When the receiver and the transmitter are the same physical entity, the receiver and the transmitter may be collectively referred to as a transceiver.

In a possible implementation, if the communication apparatus 400 is a chip or a circuit, the interface 430 is an input interface or the interface 430 is an output interface.

In an implementation, it may be considered that a function of the interface 430 is implemented by using a transceiver circuit or a dedicated transceiver chip. It may be considered that the processor 410 is implemented by using a dedicated processing chip, a processing circuit, a processor, or a general-purpose chip.

In another implementation, it may be considered that the communication device provided in this embodiment of this application is implemented by using a general-purpose computer. To be specific, program code for implementing functions of the processor 410 and the interface 430 is stored in the memory 420, and the general-purpose processor implements the functions of the processor 410 and the interface 430 by executing the code in the memory 420.

For concepts, explanations, detailed descriptions, and other steps of the apparatus 400 that are related to the technical solutions provided in embodiments of this application, refer to the descriptions of these content in the foregoing method or other embodiments. Details are not described herein.

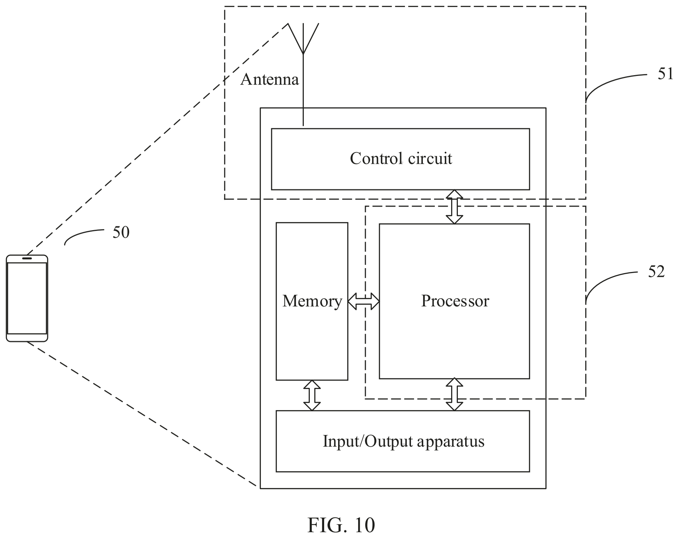

FIG. 10 is a diagram of a structure of a terminal device 50 according to this application. For ease of description, FIG. 10 shows only main components of the communication apparatus. As shown in FIG. 10, the terminal device 50 includes a processor, a memory, a control circuit, an antenna, and an input/output apparatus.

The processor is mainly configured to: process a communication protocol and communication data, control the entire terminal device, execute a software program, and process data of the software program, for example, is configured to support the terminal device in performing the actions described in the foregoing embodiments of the indication method for transmission of a precoding matrix. The memory is mainly configured to store a software program and data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor may read a software program in a storage unit, explain and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 10 shows only one memory and only one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 10 integrates functions of the baseband processor and the central processing unit. A person skilled in the art may understand that the baseband processor and the central processing unit may be alternatively processors independent of each other, and are connected to each other by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

As shown in FIG. 10, the terminal device 50 includes an interface unit 51 and a processing unit 52. The interface unit may also be referred to as a transceiver, a transceiver machine, a transceiver apparatus, or the like. Optionally, a component configured to implement a receiving function in the interface unit 51 may be considered as a receiving unit, and a component configured to implement a sending function in the interface unit 51 may be considered as a sending unit. In other words, the interface unit 51 includes the receiving unit and the sending unit. For example, the receiving unit may also be referred to as a receiver machine, a receiver, a receiver circuit, or the like, and the sending unit may also be referred to as a transmitter machine, a transmitter, a transmit circuit, or the like.

The terminal device shown in FIG. 10 may perform the actions performed by the terminal device in the method 200. To avoid repetition, detailed descriptions thereof are omitted herein.

An embodiment of this application further provides a computer-readable storage medium. The computer-readable storage medium stores computer instructions used to implement the method performed by the network device or the terminal device in the foregoing method embodiments.

For example, when a computer program is executed by a computer, the computer is caused to implement the method performed by the network device or the terminal device in the foregoing method embodiments.

An embodiment of this application further provides a computer program product including instructions. When the instructions are executed by a computer, the computer is caused to implement the method performed by the terminal device or the method performed by the network device in the foregoing method embodiments.

An embodiment of this application further provides a communication system. The communication system includes the network device and the terminal device in the foregoing embodiments.

For explanations and beneficial effects of related content of any one of the apparatuses provided above, refer to the corresponding method embodiment provided above. Details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware, firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium that can be accessed by the computer, or a data storage device like a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes merely an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, units and algorithm steps can be implemented by electronic hardware or a combination of computer software and electronic hardware. Whether these functions are performed by using hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for convenient and brief description, for a specific operating process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one place, or may be distributed on a plurality of network units. A part or all of the units may be selected based on an actual requirement to achieve the objectives of the solutions of embodiments. In addition, functional units in embodiments of this application may be integrated into one processing unit, each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes: any medium that can store program code, like a USB flash disk, a removable hard disk drive, a read-only memory, a random access memory, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal sending method, comprising:
determining a first signal and a first resource, wherein the first signal is used to carry downlink control information, the first signal comprises N signal elements, the N signal elements correspond to a same signal, the first resource comprises N resource groups, any one of the N resource groups comprises M subcarriers on one time domain symbol, the N resource groups correspond to N time domain symbols, and the N time domain symbols correspond to at least two time units, wherein M is a positive integer, and N is a positive integer greater than or equal to 2; and
sending the first signal on the first resource, wherein the N signal elements are in one-to-one correspondence with the N resource groups.

2. The method according to claim 1, wherein the method further comprises:
receiving an echo signal of the first signal; and
performing sensing based on the echo signal.

3. The method according to claim 1 or 2, wherein the method further comprises:
sending first indication information, wherein the first indication information indicates at least one of the quantity N of signal elements comprised in the first signal, the quantity M of subcarriers comprised in each of the N resource groups, frequency domain positions of the M subcarriers comprised in each of the N resource groups, and a modulation and coding scheme MCS corresponding to the first signal.

4. The method according to claim 3, wherein the first indication information is carried in any one of a physical broadcast channel PBCH, a system information block SIB, radio resource management RRC signaling, media access control MAC signaling, and downlink control information DCI.

5. The method according to any one of claims 1 to 4, wherein the method further comprises:
sending second indication information, wherein the second indication information indicates configuration information of a second signal, the second signal is used to carry downlink control information, and the second indication information and the first indication information are carried in same signaling, wherein the configuration information comprises at least one of a quantity of time domain symbols occupied by the second signal in one time unit, a symbol index of a time domain symbol occupied by the second signal in one time unit, a quantity of subcarriers occupied by the second signal, and an index of a subcarrier occupied by the second signal; and
sending the second signal, wherein the time domain symbol occupied by the second signal belongs to one time unit.

6. A signal receiving method, comprising:
determining a first resource, wherein the first resource comprises N resource groups, any one of the N resource groups comprises M subcarriers on one time domain symbol, the N resource groups correspond to N time domain symbols, and the N time domain symbols correspond to at least two time units, wherein M is a positive integer, and N is a positive integer greater than or equal to 2; and
receiving a first signal on the first resource, wherein the first signal is used to carry downlink control information, the first signal comprises N signal elements, the N signal elements correspond to a same signal, and the N signal elements are in one-to-one correspondence with the N resource groups.

7. The method according to claim 6, wherein the method further comprises:
performing sensing based on the first signal.

8. The method according to claim 6 or 7, wherein the method further comprises:
receiving first indication information, wherein the first indication information indicates at least one of the quantity N of signal elements comprised in the first signal, the quantity M of subcarriers comprised in each of the N resource groups, frequency domain positions of the M subcarriers comprised in each of the N resource groups, and a modulation and coding scheme MCS corresponding to the first signal.

9. The method according to claim 8, wherein the first indication information is carried in any one of a physical broadcast channel PBCH, a system information block SIB, radio resource management RRC signaling, media access control MAC signaling, and downlink control information DCI.

10. The method according to any one of claims 6 to 9, wherein the method further comprises:
receiving second indication information, wherein the second indication information indicates configuration information of a second signal, the second signal is used to carry downlink control information, and the second indication information and the first indication information are carried in same signaling, wherein the configuration information comprises at least one of a quantity of symbols occupied by the second signal in one time unit, a symbol index of a symbol occupied by the second signal in one time unit, a quantity of subcarriers occupied by the second signal, and an index of a subcarrier occupied by the second signal; and
receiving the second signal, wherein the symbol occupied by the second signal belongs to one time unit.

11. A signal receiving method, comprising:
receiving an echo signal of a first signal on a first resource, wherein the first signal is used to carry downlink control information, the first signal comprises N signal elements, the N signal elements correspond to a same signal, the first resource comprises N resource groups, any one of the N resource groups comprises M subcarriers on one time domain symbol, the N resource groups correspond to N time domain symbols, and the N time domain symbols correspond to at least two time units, wherein M is a positive integer, N is a positive integer greater than or equal to 2, and the N signal elements are in one-to-one correspondence with the N resource groups; and
performing sensing based on the echo signal.

12. A signal sending apparatus, comprising:
a processing unit, configured to determine a first signal and a first resource, wherein the first signal is used to carry downlink control information, the first signal comprises N signal elements, the N signal elements correspond to a same signal, the first resource comprises N resource groups, any one of the N resource groups comprises M subcarriers on one time domain symbol, the N resource groups correspond to N time domain symbols, and the N time domain symbols correspond to at least two time units, wherein M is a positive integer, and N is a positive integer greater than or equal to 2; and
an interface unit, configured to send the first signal on the first resource, wherein the N signal elements are in one-to-one correspondence with the N resource groups.

13. The apparatus according to claim 12, wherein
the interface unit is further configured to receive an echo signal of the first signal; and
the processing unit is further configured to perform sensing based on the echo signal.

14. The apparatus according to claim 12 or 13, wherein the interface unit is further configured to:
send first indication information, wherein the first indication information indicates at least one of the quantity N of signal elements comprised in the first signal, the quantity M of subcarriers comprised in each of the N resource groups, frequency domain positions of the M subcarriers comprised in each of the N resource groups, and a modulation and coding scheme MCS corresponding to the first signal.

15. The apparatus according to claim 14, wherein the first indication information is carried in any one of a physical broadcast channel PBCH, a system information block SIB, radio resource management RRC signaling, media access control MAC signaling, and downlink control information DCI.

16. The apparatus according to any one of claims 12 to 15, wherein the interface unit is further configured to:
send second indication information, wherein the second indication information indicates configuration information of a second signal, the second signal is used to carry downlink control information, and the second indication information and the first indication information are carried in same signaling, wherein the configuration information comprises at least one of a quantity of symbols occupied by the second signal in one time unit, a symbol index of a symbol occupied by the second signal in one time unit, a quantity of subcarriers occupied by the second signal, and an index of a subcarrier occupied by the second signal; and
send the second signal, wherein the symbol occupied by the second signal belongs to one time unit.

17. A signal receiving apparatus, comprising:
a processing unit, configured to determine a first resource, wherein the first resource comprises N resource groups, any one of the N resource groups comprises M subcarriers on one time domain symbol, the N resource groups correspond to N time domain symbols, and the N time domain symbols correspond to at least two time units, wherein M is a positive integer, and N is a positive integer greater than or equal to 2; and
an interface unit, configured to receive a first signal on the first resource, wherein the first signal is used to carry downlink control information, the first signal comprises N signal elements, the N signal elements correspond to a same signal, and the N signal elements are in one-to-one correspondence with the N resource groups.

18. The apparatus according to claim 17, wherein the processing unit is further configured to perform sensing based on the first signal.

19. The apparatus according to claim 17 or 18, wherein the interface unit is further configured to receive first indication information, wherein the first indication information indicates at least one of the quantity N of signal elements comprised in the first signal, the quantity M of subcarriers comprised in each of the N resource groups, frequency domain positions of the M subcarriers comprised in each of the N resource groups, and a modulation and coding scheme MCS corresponding to the first signal.

20. The apparatus according to claim 19, wherein the first indication information is carried in any one of a physical broadcast channel PBCH, a system information block SIB, radio resource management RRC signaling, media access control MAC signaling, and downlink control information DCI.

21. The apparatus according to claim 19 or 20, wherein the interface unit is further configured to:
receive second indication information, wherein the second indication information indicates configuration information of a second signal, the second signal is used to carry downlink control information, and the second indication information and the first indication information are carried in same signaling, wherein the configuration information comprises at least one of a quantity of symbols occupied by the second signal in one time unit, a symbol index of a symbol occupied by the second signal in one time unit, a quantity of subcarriers occupied by the second signal, and an index of a subcarrier occupied by the second signal; and
receive the second signal, wherein the symbol occupied by the second signal belongs to one time unit.

22. A signal receiving apparatus, comprising:
an interface unit, configured to receive an echo signal of a first signal on a first resource, wherein the first signal is used to carry downlink control information, the first signal comprises N signal elements, the N signal elements correspond to a same signal, the first resource comprises N resource groups, any one of the N resource groups comprises M subcarriers on one time domain symbol, the N resource groups correspond to N time domain symbols, and the N time domain symbols correspond to at least two time units, wherein M is a positive integer, N is a positive integer greater than or equal to 2, and the N signal elements are in one-to-one correspondence with the N resource groups; and
a processing unit, configured to perform sensing based on the echo signal.

23. A communication apparatus, comprising:
a processor, wherein the processor is configured to execute a program or instructions, to cause the apparatus to perform the method according to any one of claims 1 to 5.

24. A communication apparatus, comprising:
a processor, wherein the processor is configured to execute a program or instructions, to cause the apparatus to perform the method according to any one of claims 6 to 10.

25. A communication apparatus, comprising:
a processor, wherein the processor is configured to execute a program or instructions, to cause the apparatus to perform the method according to claim 11.

26. A computer-readable storage medium, wherein the computer-readable storage medium stores a computer program, and when the computer program runs on a computer, the computer is caused to perform the method according to any one of claims 1 to 5, the method according to any one of claims 6 to 10, or the method according to claim 11.

27. A computer program product, comprising computer program code, wherein when the computer program code is run, the method according to any one of claims 1 to 5, the method according to any one of claims 6 to 10, or the method according to claim 11 is implemented.
